(19) **Europäisches Patentamt / European Patent Office / Office européen des brevets**

(11) **EP 4 495 282 B1**

(12) # EUROPEAN PATENT SPECIFICATION

(45) Date of publication and mention
of the grant of the patent:
**06.05.2026  Bulletin 2026/19**

(21) Application number: **23770606.4**

(22) Date of filing: **08.03.2023**

(51) International Patent Classification (IPC):
*C22C 19/05* (2006.01)    *B22F 10/28* (2021.01)
*B22F 10/38* (2021.01)    *B22F 10/64* (2021.01)
*B33Y 10/00* (2015.01)    *B33Y 40/20* (2020.01)
*B33Y 70/00* (2020.01)    *B33Y 80/00* (2015.01)
*C22C 1/04* (2023.01)    *C22F 1/10* (2006.01)
*C22F 1/11* (2006.01)

(52) Cooperative Patent Classification (CPC):
**B33Y 10/00; B22F 10/28; B22F 10/38; B22F 10/64;
B33Y 40/20; B33Y 70/00; B33Y 80/00;
C22C 1/0433; C22C 19/05; C22C 19/052;
C22C 19/053; C22C 19/055; C22F 1/10; C22F 1/11;**
B22F 2003/248;                              (Cont.)

(86) International application number:
**PCT/JP2023/008941**

(87) International publication number:
**WO 2023/176650 (21.09.2023 Gazette 2023/38)**

(54) **NI-CR ALLOY MEMBER COMPRISING ADDITIVELY MANUFACTURED ARTICLE, METHOD FOR MANUFACTURING NI-CR ALLOY MEMBER, AND PRODUCT USING NI-CR ALLOY MEMBER**

NI-CR-LEGIERUNGSELEMENT MIT GENERATIV GEFERTIGTEM ARTIKEL, VERFAHREN ZUR HERSTELLUNG EINES NI-CR-LEGIERUNGSELEMENTS UND PRODUKT MIT NI-CR-LEGIERUNGSELEMENT

ARTICLE FABRIQUÉ DE MANIÈRE ADDITIVE COMPRENANT UN ÉLÉMENT EN ALLIAGE DE NI-CR, PROCÉDÉ DE FABRICATION D'ÉLÉMENT EN ALLIAGE DE NI-CR, ET PRODUIT UTILISANT UN ÉLÉMENT EN ALLIAGE DE NI-CR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.03.2022   JP 2022042999**

(43) Date of publication of application:
**22.01.2025   Bulletin 2025/04**

(73) Proprietor: **Proterial, Ltd.**
**Tokyo 135-0061 (JP)**

(72) Inventors:
• **KUWABARA Kousuke**
**Tokyo 135-0061 (JP)**
• **DAIGO Yuzo**
**Tokyo 135-0061 (JP)**

(74) Representative: **Becker, Eberhard**
**Becker Kurig & Partner**
**Patentanwälte mbB**
**Bavariastraße 7**
**80336 München (DE)**

(56) References cited:
WO-A1-2020/179724     JP-A- 2004 003 021
JP-A- 2004 342 845     JP-A- S61 551
US-A1- 2022 001 449

• ZHANG WEN-YA ET AL: "Synthetic Effect of Cr and Mo Elements on Microstructure and Properties of Laser Cladding NiCrxMoy Alloy Coatings", vol. 33, no. 10, 18 June 2020 (2020-06-18), CN, pages 1331 - 1345, XP093281337, ISSN: 1006-7191, Retrieved from the Internet <URL:https://link.springer.com/article/10.1007/s40195-020-01081-5/fulltext.html> DOI: 10.1007/s40195-020-01081-5
• UETA SHIGEKI ET AL: "Effects of Fe, W and Mo on Kinetics of Discontinuous Precipitation in the Ni-Cr System", vol. 53, no. 10, 5 September 2012 (2012-09-05), JP, pages 1744 - 1752, XP093281161, ISSN: 1345-9678, Retrieved from the Internet <URL:https://www.jstage.jst.go.jp/article/matertrans/advpub/0/advpub_M2012132/_pdf> DOI: 10.2320/matertrans.M2012132

(52) Cooperative Patent Classification (CPC): (Cont.)
C22C 2200/00; Y02P 10/25

**Description**

Technical Field

The present invention relates to a Ni-Cr alloy member including an additively manufactured article, a method for manufacturing the Ni-Cr alloy member, and a product using the Ni-Cr alloy member.

Related Art

Members and components used in a chemical plant, a semiconductor fabrication processes, etc. require corrosion resistance to withstand corrosive environments. Although stainless steel is generally used in such environments, Ni-based alloys are selected particularly for components exposed to severe corrosive environments.

Further, as the design of the above members and components becomes increasingly complex, there is also a growing demand for complex shapes which are difficult to produce by die forging or machining. In recent years, additive manufacturing has been increasingly applied to production of members with complex shapes.

As a manufacturing method for complex-shaped members used in the corrosive environments, Patent Document 1 discloses additive manufacturing (AM) for Ni-based corrosion-resistant alloys. A heat source is supplied to a raw material powder to melt and solidify (hereinafter referred to as "melting and solidification") the raw material powder, and this process is repeatedly performed to obtain an additively manufactured article in a three-dimensional shape. According to the additive manufacturing, three-dimensional products can be obtained in a net shape or a near-net shape even if the shape is complex. It has been shown that, by applying the additive manufacturing, crystal grains having multiple columnar cell structures are formed in the Ni-based alloy, and by forming segregation of Mo between the columnar cell structures, a high-strength metal additively manufactured article (hereinafter referred to as an "additively manufactured article" or simply a "manufactured article") may be obtained. As disclosed in Patent Document 2, the term "additive manufacturing" is considered an industry-standard term as defined in ASTM (American Society for Testing and Materials) F2792.

In additive manufacturing, three-dimensional products may be obtained in a net shape or a near-net shape, and when applied to corrosion-resistant alloys, excellent properties in both strength and corrosion resistance can be obtained. However, in terms of high-temperature oxidation resistance in exposure to, for example, an environment of 600°C or higher, there is room for improvement in the additively manufactured article shown in Patent Document 1. Further improvements in high-temperature oxidation resistance are desired for an environment of, for example, a jet engine, a rocket engine, a burner exposed to flames in an incinerator, etc.

Conventionally, in such environments, melted and forged materials composed of Ni-Cr alloys (Patent Document 3) having a large Cr amount, which forms more stable surface oxide films, are used. However, in Ni-Cr alloys with a large Cr amount, stability of a body-centered cubic (BCC) phase with respect to a face-centered cubic (FCC) phase, which is a matrix phase, also increases, and separation into two-phase structures may occur during melting. In melting materials, there is a tendency that a formed amount of the BCC phase, which is a precipitate phase, becomes large, and since a Cr concentration for forming the surface oxide film becomes non-uniform, there is a problem that corrosion resistance decreases.

Related Art Documents

Patent Documents

Patent Document 1: International Patent Application Publication No. 2020/179766
Patent Document 2: Japanese Patent Application Laid-Open No. 2016-502596
Patent Document 3: Japanese Patent Application Laid-Open No. 2008-291281
Non-patent document, ZHANG WEN-YA et al. "Synthetic effect of Cr and Mo elements on microstructure and properties of laser cladding NiCrxMoy alloy coatings", ACTA METALLURGICA SINICA, vol. 33, no. 10, 18 June 2020, pages 1331-1345, discloses a synthetic effect of Cr and Mo elements on microstructure and properties of laser cladding NiCrxMoy alloy coatings. Non-patent document, UETA SHIGEKI at el. "Effects of Fe, W and Mo on kinetics of discontinuous precipitation in the Ni-Cr system", MATERIALS TRANSACTIONS, vol. 53, no. 10, 5 September 2012, pages 1744-1752, discloses effects of Fe, W and Mo on kinetics of discontinuous precipitation in the Ni-Cr system. US 2022/0001449 A1 discloses a Ni-based alloy member including an additively manufactured body, a method for manufacturing a Ni-based alloy member, and a manufactured product using a Ni-based alloy member.

SUMMARY OF INVENTION

Problem to Be Solved by Invention

In view of the above, the present invention aims to provide a Ni-Cr alloy member including an additively manufactured article, a method for manufacturing the Ni-Cr alloy member, and a product using the Ni-Cr alloy member, which exhibit improved corrosion resistance and oxidation resistance at a high temperature and are also excellent in mechanical properties.

Means for Solving Problem

The invention is set out in the appended set of claims. The following disclosure serves a better understanding of the present invention. The present invention is a Ni-Cr alloy member as defined in appended claim 1.

In this case, a size of the phase having a body-centered cubic structure included in the additively manufactured article is preferably less than 10 $\mu$m.

Further, the additively manufactured article is composed of a crystal grain having a plurality of columnar cell structures, and an accumulation part of dislocations is present between the plurality of columnar cell structures adjacent to each other.

Further, a matrix phase composed of the crystal grain is preferably composed of a Ni-based phase, and segregation of Cr is preferably not included in the matrix phase.

Further, a Vickers hardness of the additively manufactured article is preferably 240 HV or more.

Further, a yield strength of the additively manufactured article is preferably 400 MPa or more.

The present invention is a product using the Ni-Cr alloy member described above.

The present invention is a method for manufacturing a Ni-Cr alloy member including an additively manufactured article. The method is defined in appended claim 7.

Further, a heat treatment may be performed on the additively manufactured article at a temperature of 1000°C or higher and 1350°C or lower. In this case, the heat treatment is preferably performed for 0.5 hours or more and 3 hours or less.

Effects of Invention

According to the present invention, it is possible to provide a Ni-Cr alloy member including an additively manufactured article, a method for manufacturing the Ni-Cr alloy member, and a product using the Ni-Cr alloy member, which are excellent in corrosion resistance and oxidation resistance at a high temperature and are also excellent in mechanical properties.

BRIEF DESCRIPTION OF DRAWINGS

[FIG. 1] (a) is an image of an additively manufactured article A observed by scanning electron microscopy (SEM). (b) is an enlarged SEM image thereof showing individual crystal grains, and (c) is a further enlarged SEM image thereof showing columnar cell structures.

[FIG. 2] (a) is an image of the additively manufactured article A observed by scanning transmission electron microscopy (STEM). (b) is an enlarged view of a part b, and (c) is an enlarged view of a part c.

[FIG. 3] (a) shows a backscattered electron image by SEM of the additively manufactured article A after a solution treatment, and (b) shows a composition map of Cr in the additively manufactured article A after the solution treatment observed by SEM and EDX.

[FIG. 4] (a) shows a backscattered electron image by SEM of a forged and rolled article, and (b) shows a composition map of Cr in the forged and rolled article after the solution treatment observed by SEM and EDX.

[FIG. 5] (a) is a phase map of the additively manufactured article A, (b) is a phase map of the additively manufactured article A after the solution treatment, and (c) is a phase map of the forged and rolled article, respectively showing distributions of a FCC phase and a BCC phase acquired by electron back-scattering diffraction (EBSD).

[FIG. 6] (a) is an intensity spectrum of the additively manufactured article A, (b) is an intensity spectrum of the additively manufactured article A after the solution treatment, and (c) is an intensity spectrum of the forged and rolled article, respectively acquired by X-ray diffraction (XRD).

[FIG. 7] (a) is an optical microscope image of the additively manufactured article A and (b) is an optical microscope image of the forged and rolled article, respectively showing appearances after immersion in a 2% hydrochloric acid aqueous solution (boiling).

DESCRIPTION OF EMBODIMENTS

Hereinafter, a Ni-Cr alloy member made by additive manufacturing of the present invention will be described with reference to the accompanying drawings. First, an alloy composition and additive manufacturing will be described, and it will be described that an additively manufactured article according to the present embodiment can improve corrosion resistance by suppressing precipitation of a BCC phase which causes segregation of Cr. Further, it will be described that the additively manufactured article according to the present embodiment can obtain a high yield strength compared to a Ni-Cr alloy member with the same composition that has undergone forging and rolling. In the present specification, "%" indicating a content of a metallic element refers to "mass%". Further, a numerical value range expressed using "A to B" includes numeral values "A" and "B" as a lower limit value and an upper limit value. Further, the upper limit value and the lower limit value may be combined in any manner.

[Alloy composition]

The additively manufactured article is composed of a Ni-Cr alloy in which a content of Ni is highest by a mass ratio, and a content of Cr is second highest. In other words, the additively manufactured article is a Ni-Cr-based alloy member. In the present embodiment, Ni and Cr are referred to as main constituent elements in the Ni-Cr alloy member. Among the main constituent elements, Cr is contained in a range of 25% or more and 49% or less. The content of Ni is specified as a balance against Cr and other elements.

The present invention is limited to a specific alloy composition and suitable for a constituent member of a semiconductor fabrication apparatus used in, for example, severe corrosive environments will be described below.

(Chromium Cr: 25% or more and 49% or less)

Cr has an effect of improving corrosion resistance against a halogen-based gas such as HCl, $Cl_2$, HF, $F_2$, $NF_3$, $ClF_3$, and HBr used in a semiconductor fabrication apparatus. In particular, when a constituent member of the semiconductor fabrication apparatus is exposed to outside air during opening, moisture originated from atmosphere is adsorbed on a metal surface, and upon hydration between the adsorbed moisture and a halogen-based process gas, electrochemical corrosion occurs. Cr exhibits corrosion resistance against a hydrated acid particularly in a region of a relatively low concentration. Further, by containing a larger amount of Cr, it is possible to provide resistance also against high-temperature oxidation required for a burner and the like. To manifest these properties, it is required to contain 25% or more, and more preferably 30% or more, of Cr. However, if the content exceeds 49% (i.e., more than half), precipitation of the BCC phase, which is a crystal structure similar to pure Cr, is likely to occur, and it becomes difficult to maintain uniformity of a Cr concentration required for manifestation of high-temperature oxidation resistance. Thus, its content is set to 25% or more and 49% or less, and more preferably 30% or more and 49% or less.

Further, Mo is added as a main constituent element in the present alloy. (Molybdenum Mo: 0.5% or more and 5.0% or less) Mo is contained because it has an effect of improving corrosion resistance against a halogen-based gas such as HCl, $Cl_2$, HF, $F_2$, $NF_3$, $ClF_3$, and HBr, similar to Cr. However, in the case where a large amount of Cr is contained, upon excessive addition of Mo, coarse intermetallic compounds (P phase, $\mu$ phase, $\sigma$ phase, etc.) are likely to occur, which results in adverse effects such as deterioration in corrosion resistance and deterioration in ductility due to formation of Mo-depleted regions. Thus, the content of Mo is set to 0.5% or more and 5.0% or less. To correspond to a large Cr amount, an upper limit of the Mo amount is 5%. Further, to reliably improve corrosion resistance, a lower limit of the Mo amount is 0.5%, and more preferably 1.0%.

(Other elements)

The Ni-Cr alloy member in the additively manufactured article of the present embodiment has a basic composition including: 25% or more and 49% or less of Cr, 0.5% or more and 5.0% or less of Mo, and a balance of Ni and unavoidable impurities. The Ni-Cr alloy member according to the present embodiment may be composed of Cr, Mo, and Ni. Further, in addition to the main constituent elements, other optional elements may be included as required. The optional elements will be described below.

(Tantalum Ta: 2.5% or less)

Ta has an effect of improving resistance against corrosion by a reducing acid and an oxidizing acid, and improving corrosion resistance against pitting corrosion and crevice corrosion. Thus, Ta may be contained in a range of 2.5% or less, and preferably 1.0% or more and 2.5% or less as required.

(Tungsten W: 5% or less)

Similar to Mo, W has an effect of improving corrosion resistance against a reducing acid. Further, at the same time, W increases a viscosity of a molten metal since it can increase a melting point, and particle diameter control becomes easy when manufacturing a powder. Accordingly, formation of fine powders (particle diameter less than 5 $\mu$m), with which additive manufacturing tends to be difficult, can be suppressed. Thus, W may be contained in a range of 5% or less, and preferably 2% or more and 5% or less as required.

Hereinafter, 7.00% or less of Fe, 2.50% or less of Co, 0.04% or less of N, 0.50% or less of Mn, 0.01% or less of Mg, 0.20% or less of Si, 0.50% or less of Al, 0.50% or less of Ti, 0.25% or less of Cu, 0.30% or less of V, 0.05% or less of B, 0.20% or less of Zr, 0.10% or less of O, etc. may be contained.

As other unavoidable impurities, since C forms carbides with Cr near crystal grain boundaries and increases deterioration in corrosion resistance, a content of C is preferably suppressed to less than 0.05%. Further, since S and P segregate to grain boundaries and are a cause for high-temperature cracking, S and P are preferably suppressed to less than 0.01%.

Further, the contents of these unavoidable impurities are preferably low and may also be 0%.

[Raw material alloy powder]

A raw material alloy powder having the above composition is prepared for manufacturing the additively manufactured article according to the present embodiment. A chemical composition of the raw material alloy powder is basically the same as a chemical composition of the additively manufactured article. However, in the case where the additively manufactured article includes an oxide film with excellent corrosion resistance on a surface layer, an oxygen content of the additively manufactured article may also be configured to be higher than in the raw material alloy powder. The oxide film will be described later.

The chemical compositions of the raw material alloy powder and the additively manufactured article may be measured by X-ray fluorescence analysis and inductively coupled plasma (ICP) analysis. Further, contents of C, S, N, and O may be determined by gas analysis based on a combustion method.

The additive manufacturing method is a manufacturing method that obtains a desired shape by repeatedly melting and solidifying individual powder particles. However, if the particle diameter of the raw material alloy powder is too small, it becomes difficult to obtain a sound additively manufactured article since supply of the power becomes unstable. Conversely, if the particle diameter of the raw material alloy powder is too large, it becomes difficult to obtain a sound additively manufactured article since powder particles that cannot be completely melted by a small heat source are included. Thus, the particle diameter of the raw material alloy powder is generally used in a range of approximately 5 to 500 $\mu$m, but a required particle size distribution differs between a powder bed method and a metal deposition method. In the powder bed method, a particle diameter d50 corresponding to a cumulative 50 volume% is preferably approximately 10 to 100 $\mu$m in a cumulative distribution curve indicating a relationship between a particle diameter obtained by a laser diffraction method and a cumulative volume from a small particle diameter side. Further, in the metal deposition method, the particle diameter d50 is preferably approximately 30 to 250 $\mu$m.

The manufacturing of the raw material alloy powder may involve gas atomization, water atomization, disk atomization, plasma atomization, plasma rotating electrode atomization, etc. Since the raw material alloy powder is preferably spherical and a method also excellent in productivity is preferred, the raw material alloy powder is preferably produced by gas atomization.

[Additive manufacturing]

Additive manufacturing directed to metallic materials may be categorized into a powder bed fusion (PBF) method and a directed energy deposition (DED) method. The additively manufactured article of the present embodiment may be manufactured by either method.

The powder bed fusion method (powder bed method) is a method in which a metal powder is spread out, and a portion to be manufactured is melted and solidified by a laser beam or an electron beam as a heat source. The metal powder is spread out, a solidified layer is formed by melting and solidifying the metal powder, and this operation is repeatedly performed to stack the solidified layers to form into a member of a predetermined shape. The powder bed method includes a laser beam heat source method and an electron beam heat source method below.

In the laser beam heat source method, a laser beam is irradiated onto a spread metal powder material to melt and solidify the metal powder material for additive manufacturing, and the laser beam heat source method is known to include selective laser melting (SLM) and selective laser sintering (SLS). In the laser beam heat source method, melting and solidification are performed in an inert atmosphere such as argon and nitrogen.

In the electron beam heat source method, by irradiating an electron beam and causing the electron beam to collide with a spread metal powder in a high vacuum, kinetic energy is converted into heat to melt the powder. In the electron beam method, melting and solidification are performed in a vacuum. The electron beam heat source method is referred to as selective electron beam melting (SEBM), or simply electron beam melting (EBM).

In the directed energy deposition method, also called a metal deposition method, a metal powder is continuously sprayed to a front position in a direction of moving a laser beam or an electron beam, and the laser beam or the electron beam is irradiated to the supplied metal powder to melt and solidify the supplied metal powder for manufacturing.

While the powder bed method has an advantage of high shape accuracy for the additively manufactured article, the directed energy deposition method has an advantage that high-speed manufacturing is possible. In the powder bed method, the SLM is a method that selectively melts and solidifies a powder bed having a stacked thickness of several tens of micrometers using a fine laser beam and stacks the solidified layers to perform manufacturing. Compared to other additive manufacturing methods, the SLM has a feature of being capable of manufacturing precision components . In the present embodiment, in the case of manufacturing precision components, the SLM is preferably adopted. In that case, for example, it is possible to select from conditions of a laser power of 1000 W or less, a scanning speed of 7000 mm/s or less, a scanning pitch of 0.02 to 0.20 mm, and a layer thickness of 0.01 to 0.2 mm, and appropriately set an energy density to perform manufacturing.

A scanning path of the laser beam or the electron beam in the powder bed method and the directed energy deposition method may be any scanning path. Scanning may be performed reciprocatingly parallel to an X-axis direction, and scanning may be performed reciprocatingly parallel to a Y-axis direction. The additively manufactured article is stacked in a Z-axis direction (generally a vertical direction), with an upper end surface thereof referred to as an XY surface and each lateral surface referred to as a Z surface.

Further, in the additively manufactured article, on the upper end surface, which is the XY surface, and the lateral surface, which is the Z surface, a scanning of the heat source such as the laser beam is preferably performed two or more times (e.g., twice) to improve dimensional accuracy and surface accuracy. In scans of a second time and onward, only the scanning of the laser beam or the like is performed, without supplying the metal powder. The XY surface and the Z surface constitute an outer surface of the additively manufactured article. The multiple-time scanning of the laser beam or the like may contribute to improvement in corrosion resistance of the additively manufactured article (to be described later).

[Corrosion resistance and high-temperature oxidation resistance]

In a Ni-Cr alloy member composed of an additively manufactured article including a large amount of Cr as in the present embodiment, to manifest corrosion resistance contributed by Cr, it is effective that bias is not present in a Cr concentration in the additively manufactured article, i.e., Cr is uniformly dispersed without causing Cr segregation. Factors affecting dispersion of Cr are broadly divided into solidification segregation that occurs during solidification, and composition fluctuations arising from solid-phase transformation that occurs after solidification. Segregation may be described as a phenomenon in which specific elements are unevenly distributed during solidification or solid-phase transformation. In this regard, in additive manufacturing, macroscopic solidification segregation across an entirety of a melted part may be prevented by local melting by the fine heat source described above and the accompanying local rapid cooling. Specifically, when solidifying from a high-temperature range (1400°C or higher) of melting, by cooling at a high speed without holding a cooling process in a temperature range (intermediate temperature range) of approximately 1000°C to 300°C, formation of precipitates and segregation can be suppressed. In other words, it is characterized by having "a process of rapid cooling in a temperature range above 300°C and below a solidification point during melting and solidification accompanying additive manufacturing".

Examples of the precipitates that can be suppressed in the above process include carbides and intermetallic compounds. However, in a Ni-Cr alloy including a large amount of Cr, it is required to suppress formation of the BCC phase arising from pure Cr. Particularly, in a Ni-Cr alloy having a Cr amount exceeding 25 mass%, and further exceeding 30 mass%, a risk of formation of the BCC phase after solidification becomes high. Upon formation of the BCC phase, an FCC phase having a small Cr amount forms around the BCC phase having a large Cr amount, and a non-uniform distribution occurs in the Cr concentration. Herein, an additive manufacturing process at a high cooling rate in the intermediate temperature range, in which phase transformation is possible, is effective in terms of suppressing the BCC phase. It can prevent formation of the BCC phase in the intermediate temperature range without including Cr segregation parts. Due to features of such a process, even though a Cr amount is 25 mass%, and more preferably 30 mass% or more, a Ni-Cr alloy with a phase fraction of the BCC phase of less than 2.5% (including 0) can be obtained. The phase fraction of the BCC phase is preferably small, and if it is less than 2.5%, it can be said that the effect of suppressing BCC phase formation described above is achieved. A means for confirming that the phase fraction is less than 2.5% may be, for example, confirming by obtaining a phase map in electron back-scattered diffraction (EBSD) and calculating that a detection ratio of the BCC phase is less than 2.5% of the total. Further, it may also be confirmed by absence (substantial non-detection) of a diffraction peak arising from the BCC phase in X-ray diffraction (XRD). Alternatively, the phase fraction being small may be confirmed by a peak intensity of less than 3%, and more preferably a peak intensity of less than 2%, with respect to a peak intensity of the FCC phase. In addition, it is also possible to evaluate on a basis that a region showing diffraction spots of the BCC phase in transmission electron microscopy (TEM) is less than 2.5%.

In a Ni-Cr alloy having a macroscopically unbiased and uniform structure, it is believed that any cross-section would have a similar detection ratio of the BCC phase, so it is believed that the phase fraction of the BCC phase would be approximately the same whether taken as an area ratio or a volume ratio.

Further, by including, on a surface layer, a film composed of oxide ($Cr_2O_3$) with Cr as a constituent element, the additively manufactured article according to the present embodiment can improve corrosion resistance and high-temperature oxidation resistance. The oxide film is formed in a range of 1 nm to 1000 nm from the surface of the additively manufactured article, and preferably has a thickness of 1 nm to 100 nm. The thickness of the oxide film is more preferably 2 to 20 nm, and even more preferably formed into a thickness of 3 to 10 nm. For example, in an additively manufactured article of a Ni-Cr alloy including 25 mass% or more, and more preferably 30 mass% or more, of Cr, since a more stable surface oxide film is formed, the additively manufactured article is also excellent in oxidation resistance at a high-temperature including high-temperature atmospheres such as burners, in addition to corrosion resistance.

The oxide film according to the present embodiment is preferably formed by an oxidation treatment under a high-temperature environment and a low-oxygen atmosphere, on an additively manufactured article in which Cr is uniformly dispersed. The oxidation treatment may be performed during the additive manufacturing. Since the oxide film is formed on the outer surface of the additively manufactured article, the oxidation treatment performed during the additive manufacturing is performed when forming the outer surface. Specifically, in the laser beam heat source type of the powder bed method, as described above, the additive manufacturing is performed in an inert atmosphere such as nitrogen or argon. If a trace amount of oxygen is contained in the inert gas, the oxidation treatment can be performed during the process of the additive manufacturing method in which the raw material alloy powder melts and solidifies.

In the present embodiment, an oxygen concentration in the oxidation treatment is preferably in a range of 100 ppm to 21%, more preferably in a range of 100 ppm to 1%, and even more preferably in a range of 100 to 2000 ppm. The oxygen concentration is defined based on volume.

Further, in the present embodiment, a temperature in the oxidation treatment is preferably in a range of 300 to 1000°C, more preferably in a range of 400 to 800°C, and even more preferably in a range of 500 to 600°C.

In the above range of the oxygen concentration, an oxidation treatment at a low oxygen concentration is preferable in terms of obtaining a dense oxide film. However, even at an oxygen concentration of 21%, for example, if a low temperature around 200 to 300°C is selected, a dense oxide film can be formed.

[Structure]

Even with a Ni-Cr alloy having the same chemical composition, compared to a forged and rolled article which is a material undergone forging and rolling, the additively manufactured article according to the present embodiment exhibits improved yield strength and hardness, as shown in Examples to be described later. The additively manufactured article with improved mechanical properties has a columnar cell structure formed in the additive manufacturing process. It is understood that, with an accumulation part of dislocations formed at a boundary part of the columnar cell structure and functioning as a so-called dislocation pinning effect, the mechanical properties are improved.

Next, a mechanism by which the columnar cell structure formed in the additively manufactured article contributes to improvement in mechanical properties will be described.

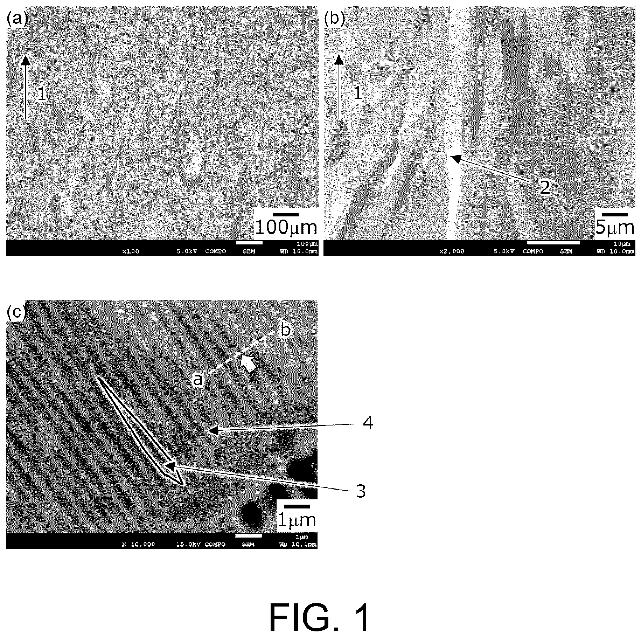

As described above, the present application adopts additive manufacturing using a laser beam or an electron beam. Since melting and solidification are performed using a laser beam or an electron beam, a solidification rate is extremely high, and fine columnar cell structures are formed within crystal grains due to rapid solidification. When observing the structure after solidification, as shown in (c) of FIG. 1, multiple columnar cell structures 3 aggregate to form crystal grains. Then, between adjacent cell structures 3 (at boundaries of cells), dislocations (streak-like patterns) occur within the cell structure due to rapid solidification in the additive manufacturing process. The dislocations within the cell structures move to become energetically stable and are to form dislocation bonds, but remain largely unreduced due to the rapid solidification in the additive manufacturing process. Thus, a dislocation density within the cell structure remains high. It is believed that the high dislocation density leads to improvement in mechanical properties of the additively manufactured article.

Herein, FIG. 1 shows SEM images of the additively manufactured article. The additively manufactured article shows a morphology of a columnar crystal grain 2 (hereinafter also referred to as a columnar crystal 2) extending in a building direction 1 within the manufactured article structure as shown in (a), and each columnar crystal grain 2 is formed to be arranged in the building direction 1 as shown in (b). In the present embodiment, an average grain diameter of the columnar crystal grain 2 is 5 to 150 µm, and preferably approximately 10 to 50 µm. In the further magnified view (c), portions shown as white regions are columnar cell boundaries 4, and regions surrounded by the cell boundaries are columnar cell structures 3. Many of the columnar cell boundaries are seen to exhibit a morphology with a short axis and a long axis. The short axis direction is 200 to 4000 nm, and preferably approximately 500 to 2000 nm. In the long axis direction, a length is 4 to 80 $\mu$m, and preferably approximately 5 to 30 $\mu$m. Although not shown in this SEM image, circular white regions are also observable in some SEM images. These are cell boundaries that appear circular because the columnar cell structures 3 are cut in a cross-section perpendicular to the paper surface. In addition, as the cross-section of the columnar cell structure 3 is not a perfect circle, an average diameter of the cross-section of the columnar cell structure 3 is calculated as an average diameter of an equivalent circle. In the present embodiment, an average diameter of the equivalent circle in the cross-section of the columnar cell structure 3 is 1000 nm or less. Further, many of the columnar cell structures 3 adjacent to each other are arranged in the same orientation, and multiple columnar cell structures 3 are formed in one crystal grain. One crystal grain contains approximately several tens to several thousands of columnar cell structures 3 therein. However, all crystal grains constituting the additively manufactured article of the present embodiment do not necessarily have columnar cell structures 3. Considering that the average grain diameter of crystal grains in the forged and rolled article is generally several tens to several hundreds of micrometers, it is learned that the additively manufactured article has fine structures.

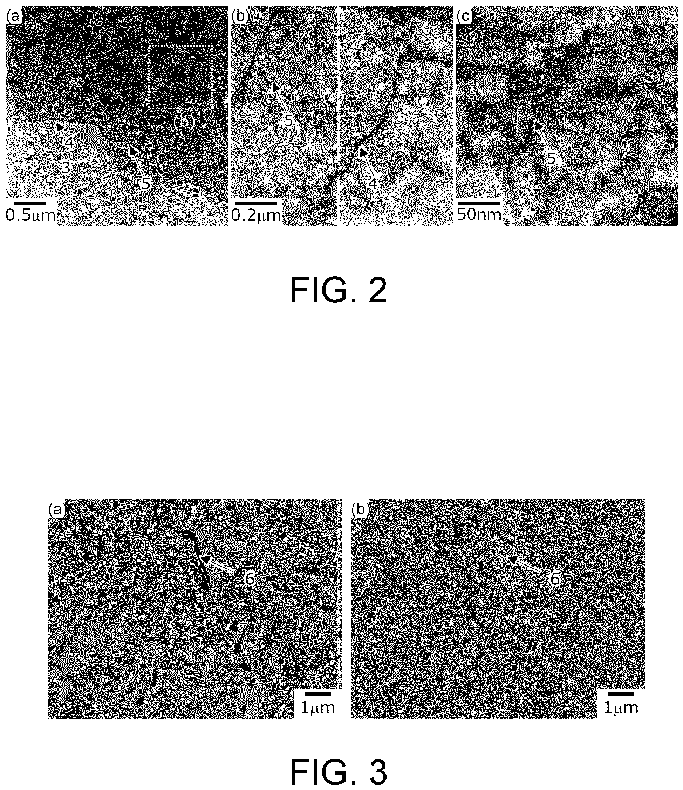

(a) of FIG. 2 is an image viewed from a position indicated by a dashed line ab in (c) of FIG. 1, and is a STEM image of a thin slice cut out by focused ion beam processing. Extracted and enlarged views of a part b and a part c in the view correspond to (b) of FIG. 2 and (c) of FIG. 2, respectively. Herein, black streaks 5 seen in the bright-field image indicate dislocations at which electrons are scattered due to strain fields. Herein, a larger number of black streaks 5 indicates a higher dislocation density. Although dislocations are also present within the columnar cell structures 3, a tendency is observed in which more dislocations accumulate at the columnar cell boundaries 4. Further, although dispersion of oxides is also seen in the STEM observation, segregation of Cr was not observed. Further, similarly for other constituent elements such as Mo and Ni, significant segregation, i.e., bias, was not observed in elemental analysis (energy-dispersive X-ray spectroscopy: EDS) in the SEM.

Generally, a dislocation density $\rho$ in a fully annealed metal material is approximately $10^9$ to $10^{11}$ m$^{-2}$. Further, it is known that the dislocation density $\rho$ in a severely worked metal material is approximately $10^{14}$ to $10^{16}$ m$^{-2}$. The additively manufactured article according to the present embodiment can obtain a dislocation density $\rho$ of $10^{14}$ m$^{-2}$ or higher, and further $10^{16}$ m$^{-2}$ or higher, without involving severe working. It is believed that the dislocations that are dispersed in the structures in this manner and further accumulated and locked at the columnar cell boundary 4 parts contribute to improvement in mechanical strength of the additively manufactured article.

[Mechanical properties]

Indicators of mechanical properties include a yield strength, a tensile strength, an elongation, a reduction of area, and a Vickers hardness (HV) as examples.

The yield strength of the additively manufactured article according to the present embodiment described earlier may preferably be 400 MPa or more, more preferably 500 MPa or more, and even more preferably 600 MPa or more. It is believed that, as described above, the additively manufactured article of the present invention includes a large number of dislocations, so work strengthening, which is a strengthening resulting from interaction of dislocations, acts to improve the yield strength.

Further, regarding the tensile strength, the additively manufactured article according to the present embodiment may exhibit a value preferably of 600 MPa or more, more preferably 700 MPa or more, and even more preferably 750 MPa or more.

The elongation may preferably be 20% or more, more preferably 30% or more, and even more preferably 40% or more.

Further, the reduction of area may be a value preferably of 30% or more, more preferably 40% or more, and even more preferably 50% or more.

Regarding the Vickers hardness (HV10), the additively manufactured article according to the present embodiment may exhibit a value preferably of 220 HV or more, and more preferably 240 HV or more.

Among the mechanical properties described above, the yield strength and the tensile strength are indicators for evaluating a strength, and the elongation and the reduction of area are indicators for evaluating a ductility. The Vickers hardness (HV) is, as the term suggests, an indicator for evaluating a hardness.

[Manufacturing method of additively manufactured article]

Next, a preferable manufacturing method of the additively manufactured article of the present application will be described.

The manufacturing method includes a process of obtaining an additively manufactured article composed of a Ni-Cr alloy including, by a mass ratio, 25% or more and 49% or less of Cr, 0.5% or more and 5.0% or less of Mo, further optional elements as defined in appended claim 7 and a balance of Ni and unavoidable impurities, by additive manufacturing using a laser beam or an electron beam. Herein, in the additive manufacturing, melting and solidification are repeated, but by rapidly cooling particularly without holding a solidification process in an intermediate temperature range above 300°C and below a solidification point, Cr segregation is prevented, and regions in which the BCC phase is likely to precipitate are eliminated. Thus, macro-segregation of Cr can be avoided, and precipitation of the BCC phase during cooling can be suppressed. Accordingly, oxidation resistance at a high temperature is improved. For this reason, as an additive manufacturing method, selective laser melting (SLM) which does not require preheating above 300°C is preferably used. Further, even with electron beam melting (EBM), a method that does not involve preheating above 300°C may also be used.

Further, crystal grains having multiple columnar cell structures 3 are formed, and dislocations are accumulated inside the crystal grains between multiple columnar cell structures 3 adjacent to each other. Accordingly, mechanical properties can be improved. These are the basic concepts of the manufacturing method. Then, by applying a heat treatment and/or an aging treatment described below to the additively manufactured article, mechanical properties of the additively manufactured article can be appropriately adjusted.

In the present application, by intentionally leaving dislocations at the columnar cell boundaries 4 within the crystal grains, mechanical properties of the additively manufactured article are improved based on the mechanism described above. Thus, in the case where improvement in mechanical properties is primarily expected, a heat treatment at a high temperature and over a long duration, which would cause dislocations to completely disappear, is desirably not adopted.

Further, the heat treatment below is optional and is not a mandatory process. As described later, even an as-built additively manufactured article ("manufactured article A" in Examples to be described later) without the heat treatment or the aging treatment possesses a yield strength of 400 MPa or more and a Vickers hardness of 220 HV or more, surpassing the mechanical properties of a forged and rolled article. Accordingly, the as-built additively manufactured article also has necessary and sufficient values for other mechanical properties (tensile strength, elongation, and reduction of area), and it is also suitable to use the as-built additively manufactured article.

(Heat treatment)

On the other hand, mechanical properties such as a hardness of the additively manufactured article may be adjusted by applying a heat treatment as shown in Examples to be described later. In the Ni-Cr alloy of the present application, since the Cr addition amount is high at 25% or more, it is required to set a heat treatment condition at a relatively high temperature, taking into account a eutectic reaction between Ni and Cr. The heat treatment is performed in atmosphere at a temperature of 1000°C or higher and 1350°C or lower, preferably 1000°C or higher and 1300°C or lower, and more preferably 1100°C or higher and 1250°C or lower. According to a size of the additively manufactured article, the heat treatment may be held for 10 minutes or more and 10 hours or less, and preferably 0.5 hours or more and 3 hours or less, in the above temperature range.

By setting the conditions of the heat treatment within the above ranges, distortion in the additively manufactured article can be removed. Distortion removal in the additively manufactured article contributes to improvement in shape accuracy of the additively manufactured article. On the other hand, if the heat treatment temperature exceeds 1350°C, there is a concern that coarsening of crystal grains and partial melting may occur, and the yield strength and the strength may decrease. Thus, an upper limit of the heat treatment temperature is set to 1350°C, preferably 1300°C, and more preferably 1250°C. The heat treatment under this condition may be referred to as a solution treatment. This is because a process of dissolving the alloy component of the material into a matrix phase progresses by performing the heat treatment in this range.

A lower limit of the heat treatment temperature is 1000°C, and preferably 1100°C. At 1000°C or higher, uniformity of the structures can be achieved without precipitation of the BCC phase, which becomes stable at a low temperature. Although a heat treatment below 1000°C is also possible, with a composition of a large Cr amount in particular, there is a concern about deterioration in corrosion resistance due to formation of Cr carbides in addition to formation of the BCC phase upon holding for a long duration at 500°C to 800°C, and it is required to avoid holding for a long duration.

Further, it is required to appropriately set the duration of the heat treatment based on the heat treatment temperature. For example, in the case of setting the heat treatment temperature to a range of 1200°C or higher and 1300°C or lower, the holding duration may be set to 10 minutes or more and 20 minutes or less. In the case of setting the heat treatment temperature to a range of 1100°C or higher and 1200°C or lower, the holding duration may be set to 20 minutes or more and 40 minutes or less. In the case of setting the heat treatment temperature to a range of 1000°C or higher and 1100°C or lower, the holding duration may be set to 30 minutes or more and 2 hours or less. Further, the cooling after the heat treatment is preferably performed by cooling at a cooling rate of, for example, 600°C/hour (10°C per minute) or higher, by a method such as air cooling (natural cooling), gas cooling, oil cooling, and water bath cooling to prevent precipitation of the BCC phase and the like at a low-temperature part.

[Applications]

The additively manufactured article according to the present embodiment may be applied in any manner. It may be used as built for high-strength and high-corrosion-resistant applications, or may obtain mechanical properties corresponding to applications depending on whether a heat treatment is performed.

Examples of applications requiring oxidation resistance at a high temperature include a component constituting a burner and a combustor exposed to combustion flames including sulfides, chlorides, etc., an incinerator component, a jet engine and rocket engine component, etc. Further, by utilizing the corrosion resistance against mixed acids including hydrofluoric acid, sulfuric acid, phosphoric acid, and oxidizing acid, which is manifested due to the high Cr concentration, the additively manufactured article according to the present embodiment may also be applied to a semiconductor fabrication apparatus, a chemical plant, etc. In particular, it is preferably applied to a member that is in direct contact with these corrosive gases or liquids. Further, as other application, the additively manufactured article according to the present embodiment is preferably applied to a screw and a cylinder for injection molding, a valve and a fitting of oil well drilling equipment and a chemical plant through which corrosive fluids flow, a turbine wheel of a heat exchanger, a pump, a generator, etc., an impeller of a compressor, etc. In the present invention, these machines, devices, members, components, etc. are collectively referred to as a product.

Examples

Hereinafter, the present invention will be specifically described based on Examples.

A raw material alloy powder for additive manufacturing having a chemical composition shown in Table 1 was prepared. The raw material alloy powder was produced by preparing raw materials for melting, melting the raw materials using a general high-frequency vacuum melting furnace to produce a master alloy, and performing a gas atomization method in an argon atmosphere. The atomized powder was classified into powders with particle diameters of 10 to 60 $\mu$m for use in additive manufacturing. d10, d50, and d90 of the classified powder were 18.9 $\mu$m, 33.2 $\mu$m, and 58.0 $\mu$m, respectively.

[Table 1]

| | Mass% | | | |
|---|---|---|---|---|
| | Cr | Mo | O | Ni + unavoidable impurities |
| Raw material alloy powder | 44.5 | 1.0 | 0.04 | Bal. |
| Additively manufactured article | 44.3 | 1.0 | 0.03 | Bal. |

Additive manufacturing was performed under the following conditions, and an additively manufactured article A (30 mm × 30 mm × 5 mm) was produced (hereinafter, the additively manufactured article may be simply referred to as a manufactured article).

Additive manufacturing apparatus: EOS M290 (SLM method)
Additive manufacturing conditions:

The following equation is set such that an energy density becomes 20 to 200 J/mm$^3$:

Energy density = Laser power (W) / (Scanning speed (mm/s) × Scanning pitch (mm) × Layer thickness (mm)).

In Examples, a laser power was 350 W, a scanning speed was 900 mm/s, a scanning pitch was 0.11 mm, a layer thickness was 0.04 mm, and thus an energy density was 88 J/mm$^3$.
Atmosphere: Ar (O$_2$ < 0.10%)

The chemical composition of the manufactured article A was also analyzed. The result is shown in Table 1. The composition analysis for Mo and Cr was performed according to ICP emission spectroscopy. Further, the composition analysis for O (oxygen) was performed according to an infrared absorption method.

Next, the manufactured article A, a manufactured article B obtained by applying a heat treatment to the manufactured article A, and a forged and rolled article having the same chemical composition as the manufactured article A and manufactured by forging and rolling were prepared.

The heat treatment for the manufactured article B included holding at 1200°C for 30 minutes in a vacuum atmosphere furnace, followed by cooling by introducing a nitrogen gas.

As a solution treatment progresses due to the heat treatment, the heat treatment for the manufactured article B is referred to as a "solution heat treatment".

Hereinafter, for each sample of the manufactured article A, the manufactured article B, and the forged and rolled article, structure observation was performed, a phase fraction of the BCC phase was calculated, and mechanical properties and corrosion resistance were measured.

[Microstructure]

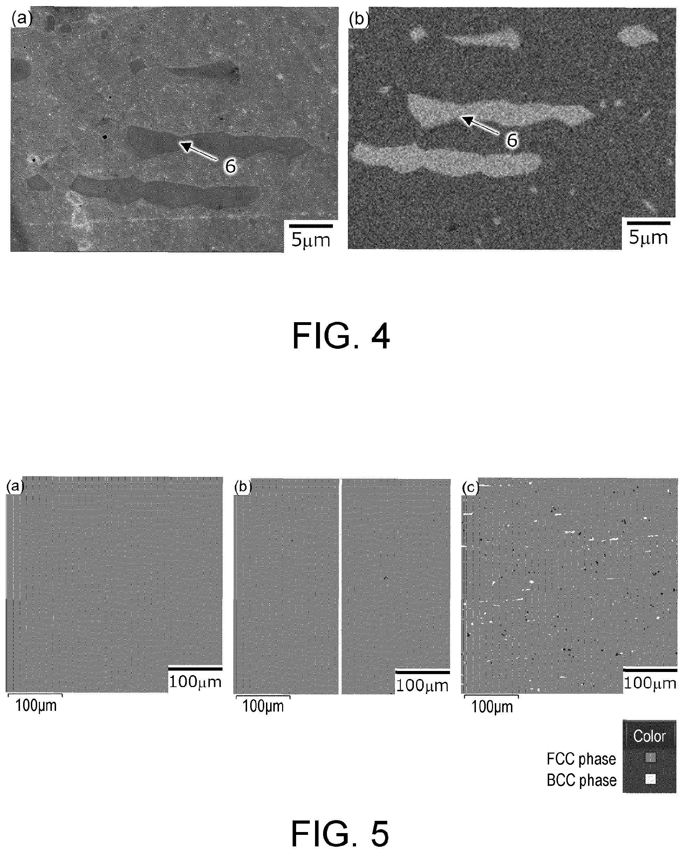

Microstructures of the manufactured article A, the manufactured article B, and the forged and rolled article were observed using a scanning electron microscope (SEM: JSM7900F manufactured by JEOL). FIG. 1 and FIG. 2 show the microstructure of the manufactured article A, FIG. 3 shows the microstructure of the manufactured article B, and FIG. 4 shows the microstructure of the forged and rolled article.

As shown in (a) and (b) of FIG. 1, the microstructure of the manufactured article is, as a whole, composed of columnar crystal grains 2 having a width of several micrometers, with a long axis oriented in a building direction 1. Inside the columnar crystal grains 2, as shown in (c) of FIG. 1, columnar cell structures 3 were observed, and columnar cell boundaries 4 between columnar cell structures 3 adjacent to each other were observed as bright parts (white parts) with a higher brightness than the surrounding in the electron microscope image (backscattered electron image).

Next, for the purpose of evaluating the cell internal structure, a thin slice (sampling spot shown in (c) of FIG. 1) cut out by focused ion beam processing from a sample obtained from the above additively manufactured article was observed using a scanning transmission electron microscope (STEM: JEM-ARM200F manufactured by JEOL) for the corresponding part. Black streaks 5 seen in bright-field images of (a), (b), and (c) of FIG. 2 indicate dislocations at which electrons are scattered by strain fields. Herein, a larger number of black streaks 5 indicates a higher dislocation density. Although dislocations are also present inside the columnar cell structure 3, a tendency was observed in which more dislocations accumulate at the columnar cell boundaries 4. Further, although dispersion of oxides was also observed in the STEM observation, segregation, i.e., bias, of constituent elements including Cr was not observed. Regarding the dislocation density of the sample, a dislocation length was determined by measuring each observable dislocation in the STEM images (observation area: 4.32 $\mu$m$^2$ (1.44 $\mu$m$^2$ $\times$ 3 images)) and calculating their total length, and an evaluation volume was calculated as "observation area $\times$ sample thickness (80 nm)". The dislocation length showed a high value of $5.0 \times 10^{15}$ m$^{-2}$.

On the other hand, in the manufactured article B obtained by applying a heat treatment to the manufactured article A, as seen in (a) of FIG. 3, the columnar cell structures disappeared even at the same magnification, and coarsely grown crystal grains and spherical or sheet-shaped precipitate phases 6 of less than 10 $\mu$m mainly at grain boundary parts were observed. As will be described later, the precipitate phase 6 corresponds to the BCC phase, and upon elemental mapping using energy-dispersive X-ray spectroscopy (EDS) performed on the precipitate phase 6 in the SEM, it was confirmed that Cr was localized in the precipitate phase 6, as shown in (b) of FIG. 3. "Localized" is described to indicate presence only at specific locations, but herein it is synonymous with segregation and may be worded as "segregated" instead. The same also applies below.

Similarly, upon observing the forged and rolled article using a scanning electron microscope, as shown in (a) of FIG. 4, more coarse, blocky precipitate phases 6 exceeding 10 $\mu$m were observed. Furthermore, upon elemental mapping using EDS performed on the precipitate phase 6, it was confirmed that Cr was localized as shown in (b) of FIG. 4.

[Phase fraction of BCC phase having body-centered cubic structure]

A phase fraction (hereinafter referred to as a BCC phase ratio) of the phase having a body-centered cubic structure of each sample was evaluated by acquiring a phase map according to EBSD measurement (JSM7900F manufactured by JEOL) on a mirror-polished XY surface, the phase map determining whether each of points obtained with a step size of 1 $\mu$m targeting a region of 400 $\mu$m $\times$ 400 $\mu$m belongs to a BCC (body-centered cubic structure) or an FCC (face-centered cubic structure) based on the Kikuchi pattern. This is shown in (a), (b), and (c) of FIG. 5. (a) of FIG. 5 corresponding to the manufactured article A was composed only of the Ni-based matrix phase (FCC phase), Cr segregation was not observed in the matrix phase, and the BCC phase was not detected. In (b) of FIG. 5 corresponding to the manufactured article B, only a very small amount of the BCC phase was detected, and regions of the BCC phase of 10 $\mu$m or larger were not detected. This is believed to be because, by performing manufacturing according to the SLM method, each layer of spread powder could be rapidly solidified, and the holding duration at a temperatures above 300°C at which the BCC phase forms could be shortened. On the other hand, in (c) of FIG. 5 corresponding to the forged and rolled article, BCC phases larger than 10 $\mu$m were detected, and their morphology matched the precipitate phase 6 in which Cr was localized as seen in (a) and (b) of FIG. 4.

Next, a BCC phase ratio was calculated as a ratio of measurement points determined to be the BCC phase in the phase map obtained by the above EBSD. The result is shown in Table 2.

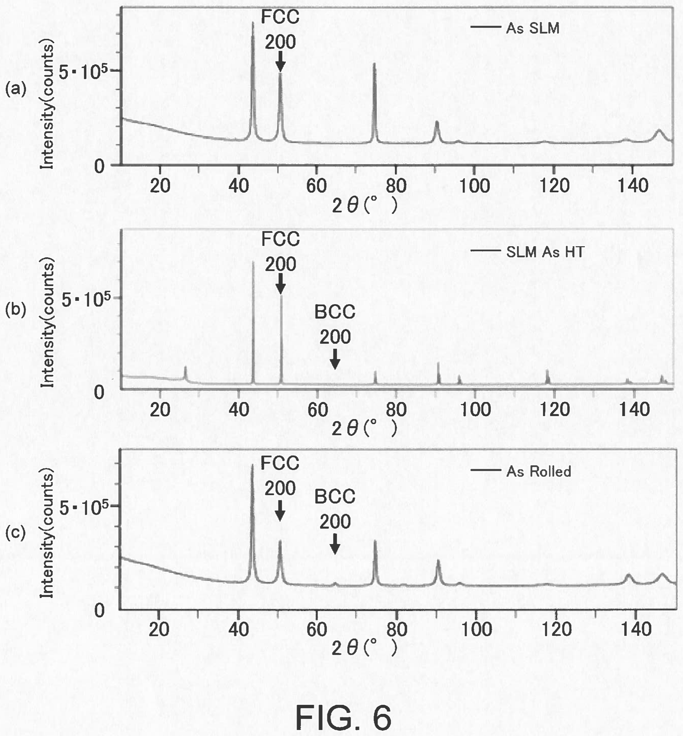

Further, although it is not a method for directly measuring the BCC phase ratio, diffraction spectra were acquired using XRD (SmartLab manufactured by Rigaku) on the same samples as EBSD. For example, the BCC phase ratio may also be evaluated by calculating an intensity ratio of a BCC (200) peak intensity ($2\theta = 64°$ to $65°$) originating from the BCC phase to an FCC (200) peak intensity ($2\theta = 50°$ to $51°$) originating from the FCC phase, which are nonoverlapping peaks for the FCC phase and the BCC phase as shown in FIG. 6. The result is shown in Table 2 as the BCC peak intensity ratio.

[Mechanical properties]

For mechanical properties, a tensile test and a Vickers hardness test were performed. Among these, tensile properties were measured at room temperature (22°C) and a high temperature (700°C) in accordance with ASTM standards (ASTM E8 and ASTM E21). A tensile direction was within the XY surface for the manufactured articles A and B, and was a direction in a rolling plane for the rolled article. Further, a Vickers hardness HV was measured in accordance with JIS standards (JIS Z 2244), with a load of 0.5 kgf and a holding duration of 10 s.

Table 2 shows each mechanical property, presence/absence of a cell structure which is a property as a microstructure, a BCC phase ratio obtained according to the above EBSD measurement, and a (200) peak intensity ratio obtained according to the above XRD measurement.

Based on Table 2, it is learned that the manufactured article A exhibits a yield strength and a hardness exceeding those of the forged and rolled article. This is believed to be due to reasons that the manufactured article A has cell structures as a result of being produced according to the additive manufacturing method, and that dislocations were introduced into the solidification structure when the powder was rapidly solidified each layer according to the SLM method.

Further, it was learned that the high-temperature tensile strength of the manufactured article A is higher than the high-temperature tensile strength of the forged and rolled material. On the other hand, it was learned that the high-temperature tensile strength of the manufactured article A is lower than the tensile strength at room temperature. This is believed to be due to reasons that, with the manufactured article A exposed to a high-temperature environment of 700°C during the high-temperature tensile test, disappearance of dislocations included at a high density in the cell structures progresses, and that movement of dislocations is promoted at a high temperature. However, it is believed that the high-temperature tensile strength of the manufactured article A was higher than the high-temperature tensile strength of the forged and rolled article since the dislocations did not completely disappear even if exposed to a high-temperature environment.

Further, according to the result of the manufactured article B, it was confirmed that, by applying the solution heat treatment, the cell structures disappeared, and the hardness could be adjusted (lowered) without significantly increasing the BCC phase ratio.

Further, according to FIG. 2, the cell structures of the manufactured article A included dislocations at a high density. In other words, since the manufactured article A, which has the same composition and only a higher dislocation density, exhibited a hardness higher than the manufactured article B, it is believed that there was a correlation between the dislocation density and the mechanical properties.

[Table 2]

| | 0.2% yield strength (room temperature) | Tensile strength (room temperature) | Elongation (room temperature) | 0.2% yield strength (700°C) | Tensile strength (700°C) | Elongation (700°C) | Hardness | Cell structure | BCC phase ratio (EBSD) | BCC peak intensity ratio (XRD) (%) |
|---|---|---|---|---|---|---|---|---|---|---|
| | (MPa) | (MPa) | (%) | (MPa) | (MPa) | (%) | (HV0.5) | Present/absent | (%) | (%) |
| Manufactured article A | 608 | 788 | 38 | 390 | 523 | 8 | 261 | Present | 0 | 0 |
| Manufactured article B | N/A | N/A | N/A | N/A | N/A | N/A | 183 | Absent | 0.2 | 0.1 |
| Forged and rolled article | 410 | 810 | 35 | 270 | 430 | 50 | 217 | Absent | 2.5 | 4.7 |

N/A: No measurement data

[Corrosion resistance]

Next, evaluation of corrosion resistance was performed using the manufactured article A and the forged and rolled article.

To perform evaluation of corrosion resistance, the XY surface of the manufactured article A and the rolling plane of the forged and rolled article were polished using 1000-grit sandpaper, and then were immersed for 24 hours respectively in three types of corrosive solutions (2% hydrochloric acid aqueous solution (boiling), 10% sulfuric acid aqueous solution (boiling), and 3% hydrofluoric acid-17% nitric acid aqueous solution (60°C)) to determine a corrosion rate (mm/year).

[Table 3]

| Corrosive solution | Corrosion rate (mm/year) | |
|---|---|---|
| | Manufactured article A | Forged and rolled article |
| 2% hydrochloric acid aqueous solution (boiling) | 0.03 | 78.9 |
| 10% sulfuric acid aqueous solution (boiling) | 0.05 | 0.05 |
| 3% hydrofluoric acid-17% nitric acid aqueous solution (60°C) | 0.08 | 0.09 |

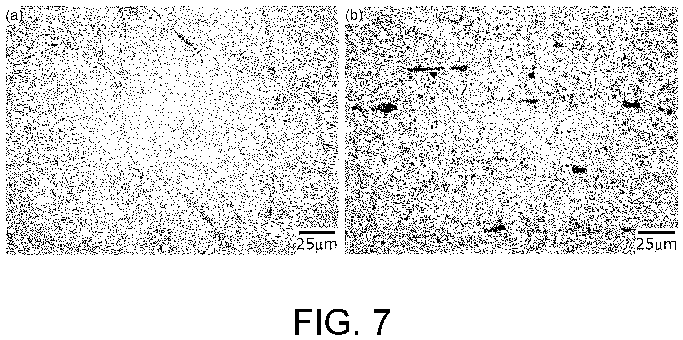

As shown in Table 3, the manufactured article A exhibited an extremely low corrosion rate compared to the forged and rolled article, particularly in the immersion in the 2% hydrochloric acid aqueous solution (boiling). FIG. 7 shows structure appearances of the manufactured article A ((a) of FIG. 7) and the forged and rolled article ((b) of FIG. 7) after the immersion test in the 2% hydrochloric acid aqueous solution (boiling). In the forged and rolled article in (b) of FIG. 7, in addition to the crystal grain boundary parts, preferential corrosion parts 7 corresponding to the precipitate phases 6 observed in FIG. 4 were confirmed. Such preferential corrosion parts 7 were not observed in the manufactured article A. This difference is speculated to be due to the difference in the BCC phase ratio shown in Table 2, i.e., the difference in the precipitation amount of the BCC phase, and shows superiority of the additively manufactured article in the present invention. Although Ni-Cr-based alloys are not generally considered to have high corrosion resistance against chlorine, it can be said that corrosion resistance was improved by configuring an additively manufactured article that suppresses Cr segregation, even with the same chemical composition.

The above evaluation results can be summarized as follows.

(1) Mechanical properties

Compared to the forged and rolled article, the additively manufactured article exhibits improved yield strength and hardness.

As shown in Table 2, it could be confirmed that, without applying a heat treatment, the additively manufactured article (manufactured article A) of the present embodiment possesses a yield strength of 500 MPa or more at room temperature, a tensile strength of 700 MPa or more at room temperature, a yield strength of 300 MPa or more at 700°C, a tensile strength of 500 MPa or more at 700°C, and a Vickers hardness of 240 or more at HV0.5.

Further, in the additively manufactured article (manufactured article B) on which a solution heat treatment was performed, the BCC phase ratio could be suppressed, and the Vickers hardness could be adjusted without significantly precipitating the BCC phase.

(2) Corrosion resistance

The additively manufactured article of the present embodiment is excellent in corrosion resistance compared to the forged and rolled article with the same chemical composition.

Reference Signs List

    1: Building direction
    2: Columnar crystal grain (columnar crystal)
    3: Columnar cell structure

4: Columnar cell boundary
5: Black streak
6: Precipitate phase
7: Preferential corrosion part
Dashed line ab: STEM observation position

**Claims**

1. A Ni-Cr alloy member comprising, by a mass ratio, 25% or more and 49% or less of Cr, 0.5% or more and 5.0% or less of Mo, 2.5% or less of Ta, 5% or less of W, 7.00% or less of Fe, 2.50% or less of Co, 0.04% or less of N, 0.50% or less of Mn, 0.01% or less of Mg, 0.20% or less of Si, 0.50% or less of A1, 0.50% or less of Ti, 0.25% or less of Cu, 0.30% or less of V, 0.05% or less of B, 0.20% or less of Zr, 0.10% or less of O, and a balance of Ni and unavoidable impurities, wherein

   the Ni-Cr alloy member comprises an additively manufactured article (A) obtained by additive manufactured using a laser beam or an electron beam which primarily has a face-centered cubic structure and in which a phase fraction of a phase having a body-centered cubic structure is less than 2.5% determined by a phase map according to electron back-scattered diffraction measurement,
   wherein the additively manufactured article (A) is composed of a crystal grain (2) having a plurality of columnar cell structures (3), and an accumulation part of dislocations is present between the plurality of columnar cell structures (3) adjacent to each other.

2. The Ni-Cr alloy member according to claim 1, wherein a size of the phase having a body-centered cubic structure included in the additively manufactured article (A) is less than 10 $\mu$m determined by scanning electron microscopy.

3. The Ni-Cr alloy member according to claim 1, wherein a matrix phase composed of the crystal grain (2) is composed of a Ni-based phase, and segregation of Cr is not included in the matrix phase.

4. The Ni-Cr alloy member according to claim 1, wherein a Vickers hardness is 240 HV or more measured in accordance with JIS Z 2244 at a load of 0.5 kgf and a holding duration of 10 s.

5. The Ni-Cr alloy member according to claim 1, wherein a yield strength is 400 MPa or more measured at room temperature in accordance with ASTM E8.

6. A component obtained by using the Ni-Cr alloy member according to claim 1 and contained in a burner, a combustor, an incinerator, a jet engine, a rocket engine, a semiconductor fabrication apparatus or a chemical plant.

7. A method for manufacturing a Ni-Cr alloy member comprising an additively manufactured article (A), the method comprising:

   an additive manufacturing process of obtaining an additively manufactured article (A) composed of a Ni-Cr alloy that comprises, by a mass ratio, 25% or more and 49% or less of Cr, 0.5% or more and 5.0% or less of Mo, 2.5% or less of Ta, 5% or less of W, 7.00% or less of Fe, 2.50% or less of Co, 0.04% or less of N, 0.50% or less of Mn, 0.01% or less of Mg, 0.20% or less of Si, 0.50% or less of Al, 0.50% or less of Ti, 0.25% or less of Cu, 0.30% or less of V, 0.05% or less of B, 0.20% or less of Zr, 0.10% or less of O, and a balance of Ni and unavoidable impurities, by additive manufacturing using a laser beam or an electron beam, wherein
   during melting and solidification accompanying the additive manufacturing, by performing rapid cooling in a temperature range above 300°C and below a solidification point, a precipitation amount of a phase having a body-centered cubic structure with respect to a phase having a face-centered cubic structure is configured to be less than 2.5% in phase fraction determined by a phase map according to electron back-scattered diffraction measurement,
   wherein the additively manufactured article (A) is composed of a crystal grain (2) having a plurality of columnar cell structures (3), and an accumulation part of dislocations is present between the plurality of columnar cell structures (3) adjacent to each other.

8. The method for manufacturing a Ni-Cr alloy member according to claim 7, wherein a heat treatment is performed on the additively manufactured article (A) at a temperature of 1000°C or higher and 1350°C or lower.

**9.** The method for manufacturing a Ni-Cr alloy member according to claim 8, wherein the heat treatment is performed for 0.5 hours or more and 3 hours or less.

**Patentansprüche**

**1.** Ni-Cr-Legierungskörper, enthaltend in Massenprozenten 25 % oder mehr und 49 % oder weniger Cr, 2,5 % oder weniger Ta, 5 % oder weniger W, 7,00 % oder weniger Fe, 2,50 % oder weniger Co, 0,04 % oder weniger N, 0,50 % oder weniger Mn, 0,01 % oder weniger Mg, 0,20 % oder weniger Si, 0,50 % oder weniger Al, 0,50 % oder weniger Ti, 0,25 % oder weniger Cu, 0,30 % oder weniger V, 0,05 % oder weniger B, 0,20 % oder weniger Zr, 0,10 % oder weniger O und Rest Ni und unvermeidbare Verunreinigungen, wobei

der Ni-Cr-Legierungskörper einen additiv hergestellten Gegenstand (A) umfasst, der durch additive Herstellung unter Verwendung eines Laserstrahls oder eines Elektronenstrahls erhalten wurde, der überwiegend eine flächenzentrierte kubische Struktur aufweist und in dem der Phasenanteil einer Phase mit einer raumzentrierten kubischen Struktur weniger als 2,5 % beträgt, bestimmt anhand einer Phasenkarte, die mittels Elektronenrückstreubeugung erhalten wurde, wobei der additiv hergestellte Gegenstand (A) aus einem Kristallkorn (2) mit einer Vielzahl von säulenförmigen Zellstrukturen (3) gebildet ist und zwischen der Vielzahl von aneinander angrenzenden säulenförmigen Zellstrukturen (3) ein Versetzungsansammlungsbereich vorhanden ist.

**2.** Ni-Cr-Legierungskörper nach Anspruch 1, wobei eine Größe der Phase mit einer raumzentrierten kubischen Struktur, umfasst in dem additiv hergestellten Gegenstand (A), weniger als 10 μm beträgt, bestimmt mittels Rasterelektronenmikroskopie.

**3.** Ni-Cr-Legierungskörper nach Anspruch 1, wobei eine aus dem Kristallkorn (2) gebildete Matrixphase aus einer Ni-basierten Phase gebildet ist und in der Matrixphase keine Cr-Segregation vorliegt.

**4.** Ni-Cr-Legierungskörper nach Anspruch 1, wobei eine Vickershärte 240 HV oder mehr beträgt, gemessen gemäß JIS Z 2244 bei einer Belastung von 0,5 kgf und einer Haltezeit von 10 s.

**5.** Ni-Cr-Legierungskörper nach Anspruch 1, wobei eine Streckgrenze 400 MPa oder mehr beträgt, gemessen bei Raumtemperatur gemäß ASTM E8.

**6.** Körper, der unter Verwendung des Ni-Cr-Legierungskörpers gemäß Anspruch 1 erhalten wird und in einem Brenner, einer Brennkammer, einer Verbrennungsanlage, einem Strahltriebwerk, einem Raketentriebwerk, einer Halbleiterfertigungsanlage oder einer chemischen Anlage enthalten ist.

**7.** Verfahren zur Herstellung eines Ni-Cr-Legierungskörpers, umfassend einen additiv hergestellten Gegenstand (A), wobei das Verfahren umfasst:

einen additiven Herstellungsprozess zum Erhalten eines additiv hergestellten Gegenstands (A), der aus einer Ni-Cr-Legierung gebildet ist, umfassend in Massenprozenten 25 % oder mehr und 49 % oder weniger Cr, 0,5 % oder mehr und 5,0 % oder weniger Mo, 2,5 % oder weniger Ta, 5 % oder weniger W, 7,00 % oder weniger Fe, 2,50 % oder weniger Co, 0,04 % oder weniger N, 0,50 % oder weniger Mn, 0,01 % oder weniger Mg, 0,20 % oder weniger Si, 0,50 % oder weniger Al, 0,50 % oder weniger Ti, 0,25 % oder weniger Cu, 0,30 % oder weniger V, 0,05 % oder weniger B, 0,20 % oder weniger Zr, 0,10 % oder weniger O und Rest Ni und unvermeidbare Verunreinigungen, und durch additive Fertigung unter Verwendung eines Laserstrahls oder eines Elektronenstrahls erhalten wird, wobei während des mit der additiven Fertigung einhergehenden Schmelzens und Erstarrens durch Durchführung einer schnellen Abkühlung in einem Temperaturbereich oberhalb von 300 °C und unterhalb eines Erstarrungspunkts eine Ausfällungsmenge einer Phase mit einer raumzentriert kubischen Struktur bezogen auf eine Phase mit einer flächenzentriert kubischen Struktur so konfiguriert ist, dass sie weniger als 2,5 % des Phasenanteils beträgt, bestimmt anhand einer Phasenkarte, die mittels Elektronenrückstreubeugung erhalten wurde, wobei der additiv hergestellte Gegenstand (A) aus einem Kristallkorn (2) mit einer Vielzahl von säulenförmigen Zellstrukturen (3) gebildet ist und zwischen der Vielzahl von aneinander angrenzenden säulenförmigen Zellstrukturen (3) ein Versetzungsansammlungsbereich vorhanden ist.

8. Verfahren zur Herstellung eines Ni-Cr-Legierungskörpers nach Anspruch 7, wobei an dem additiv hergestellten Gegenstand (A) eine Wärmebehandlung bei einer Temperatur von 1000 °C oder höher und 1350 °C oder niedriger durchgeführt wird.

9. Verfahren zur Herstellung eines Ni-Cr-Legierungskörpers nach Anspruch 8, wobei die Wärmebehandlung für 0,5 Stunden oder mehr und 3 Stunden oder weniger durchgeführt wird.


**Revendications**

1. Élément en alliage Ni-Cr comprenant, en pourcentage massique, 25 % ou plus et 49 % ou moins de Cr, 0,5% ou plus et 5,0% ou moins de Mo, 2,5 % ou moins de Ta, 5 % ou moins de W, 7,00 % ou moins de Fe, 2,50 % ou moins de Co, 0,04 % ou moins de N, 0,50 % ou moins de Mn, 0,01 % ou moins de Mg, 0,20 % ou moins de Si, 0,50 % ou moins d'Al, 0,50 % ou moins de Ti, 0,25 % ou moins de Cu, 0,30 % ou moins de V, 0,05 % ou moins de B, 0,20 % ou moins de Zr, 0,10 % ou moins de O, et le reste étant constitué de Ni et d'impuretés inévitables, dans lequel l'élément en alliage Ni-Cr comprend un article fabriqué par fabrication additive (A) obtenu par fabrication additive à l'aide d'un faisceau laser ou d'un faisceau d'électrons, qui présente principalement une structure cubique à faces centrées et dans lequel la fraction de phase d'une phase ayant une structure cubique à corps centré est inférieure à 2,5 %, telle que déterminée par une carte de phase selon une mesure par diffraction d'électrons rétrodiffusés, dans lequel l'article fabriqué par fabrications additive (A) est composé d'un grain cristallin (2) présentant une pluralité de structures cellulaires colonnaires (3), et une zone d'accumulation de dislocations est présente entre la pluralité de structures cellulaires colonnaires (3) adjacentes les unes aux autres.

2. Élément en alliage Ni-Cr selon la revendication 1, dans lequel la taille de la phase ayant une structure cubique à corps centré incluse dans l'article fabriqué par fabrication additive (A) est inférieure à 10 $\mu$m, telle que déterminée par microscopie électronique à balayage.

3. Élément en alliage Ni-Cr selon la revendication 1, dans lequel une phase matricielle composée du grain cristallin (2) est constituée d'une phase à base de Ni, et aucune ségrégation de Cr n'est présente dans la phase matricielle.

4. Élément en alliage Ni-Cr selon la revendication 1, dans lequel la dureté Vickers est de 240 HV ou plus, mesurée conformément à la norme JIS Z 2244 sous une charge de 0,5 kgf et une durée de maintien de 10 s.

5. Élément en alliage Ni-Cr selon la revendication 1, dans lequel la limite d'élasticité est de 400 MPa ou plus, mesurée à température ambiante conformément à la norme ASTM E8.

6. Composant obtenu en utilisant l'élément en alliage Ni-Cr selon la revendication 1 et contenu dans un brûleur, une chambre de combustion, un incinérateur, un moteur à réaction, un moteur-fusée, un appareil de fabrication de semi-conducteurs ou une usine chimique.

7. Procédé de fabrication d'un élément en alliage Ni-Cr comprenant un article fabriqué par fabrication additive (A), le procédé comprenant :

   un procédé de fabrication additive visant à obtenir un article fabriqué par fabrication additive (A) composé d'un alliage Ni-Cr qui comprend, en pourcentage massique, 25 % ou plus et 49 % ou moins de Cr, 0,5 % ou plus et 5,0 % ou moins de Mo, 2,5 % ou moins de Ta, 5 % ou moins de W, 7,00 % ou moins de Fe, 2,50 % ou moins de Co, 0,04 % ou moins de N, 0,50 % ou moins de Mn, 0,01 % ou moins de Mg, 0,20 % ou moins de Si, 0,50 % ou moins d'Al, 0,50 % ou moins de Ti, 0,25 % ou moins de Cu, 0,30 % ou moins de V, 0,05 % ou moins de B, 0,20 % ou moins de Zr, 0,10 % ou moins de O, et le reste étant constitué de Ni et d'impuretés inévitables, par fabrication additive utilisant un faisceau laser ou un faisceau d'électrons,
   dans laquelle lors de la fusion et de la solidification accompagnant la fabrication additive, en effectuant un refroidissement rapide dans une plage de températures supérieure à 300 °C et inférieure au point de solidification, la quantité de précipitation d'une phase ayant une structure cubique à corps centré par rapport à une phase ayant une structure cubique à faces centrées est configurée pour être inférieure à 2,5 % en fraction de phase déterminée par une carte de phase selon une mesure par diffraction d'électrons rétrodiffusés, dans lequel l'article fabriqué par fabrication additive (A) est composé d'un grain cristallin (2) présentant une pluralité de structures cellulaires colonnaires (3), et une zone d'accumulation de dislocations est présente entre la pluralité de structures cellulaires colonnaires (3) adjacentes les unes aux autres.

8. Procédé de fabrication d'un élément en alliage Ni-Cr selon la revendication 7, dans lequel un traitement thermique est effectué sur l'article fabriqué par fabrication additive (A) à une température comprise entre 1 000 °C et 1 350 °C.

9. Procédé de fabrication d'un élément en alliage Ni-Cr selon la revendication 8, dans lequel le traitement thermique est effectué pendant 0,5 heure ou plus et 3 heures ou moins.

FIG. 1

FIG. 2

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020179766 A
- JP 2016502596 A
- JP 2008291281 A
- US 20220001449 A1

**Non-patent literature cited in the description**

- **ZHANG WEN-YA et al.** Synthetic effect of Cr and Mo elements on microstructure and properties of laser cladding NiCrxMoy alloy coatings. *ACTA METALLURGICA SINICA*, 18 June 2020, vol. 33 (10), 1331-1345
- **UETA SHIGEKI**. Effects of Fe, W and Mo on kinetics of discontinuous precipitation in the Ni-Cr system. *MATERIALS TRANSACTIONS*, 05 September 2012, vol. 53 (10), 1744-1752